# EUROPÄISCHE PATENTSCHRIFT

(11) **EP 1 645 839 B1**
(45) Veröffentlichungstag und Bekanntmachung des Hinweises auf die Patenterteilung: **15.08.2007**
(21) Anmeldenummer: 05020110.2
(22) Anmeldetag: 15.09.2005
(51) Int. Cl.: G01B 11/04, B07C 3/14

(54) **Vorrichtung und Verfahren zur Überwachung von bewegten Objekten**
Apparatus and Method for Observing Moving Objects
Dispositif et procédé pour surveiller des objets en motion

(30) Priorität: 11.10.2004 DE 102004049482; 11.05.2005 EP 05010273
(43) Veröffentlichungstag der Anmeldung: 12.04.2006
(73) Patentinhaber: SICK AG, 79183 Waldkirch (DE)
(72) Erfinder: Reichenbach, Juergen, 79312 Emmendingen (DE); Schopp, Thomas, 79112 Freiburg (DE); Pierenkemper, Hans-Werner, 79312 Emmendingen (DE)
(74) Vertreter: Manitz, Finsterwald & Partner GbR

(56) Entgegenhaltungen:
- EP-A- 0 984 382
- EP-A- 1 431 707
- WO-A-02/07904
- US-A- 5 311 999
- US-A- 5 912 698
- PATENT ABSTRACTS OF JAPAN Bd. 1998, Nr. 13, 30. November 1998 (1998-11-30) & JP 10 210354 A (MINOLTA CO LTD), 7. August 1998 (1998-08-07)

## Beschreibung

Die Erfindung betrifft eine Vorrichtung und ein Verfahren zur Erfassung von durch das Gesichtsfeld eines optischen Sensors bewegten Objekten mit einer Einrichtung zur Selektion von interessierenden Bereichen, die jeweils lediglich einem Teil des Gesichtfeldes des optischen Sensors zugeordnet sind.

Bei derartigen Vorrichtungen oder Verfahren, die beispielsweise Kamerasysteme einsetzen, ist es oftmals nötig, die erfassten Bilddaten in Echtzeit oder zumindest mit sehr hoher Geschwindigkeit auszuwerten, was zur Folge hat, dass dem Auswertesystem eine hohe Rechenleistung zur Verfügung stehen muss, welche mit entsprechendem wirtschaftlichen Aufwand verbunden ist. Um die erforderliche Rechenleistung zu reduzieren, ist es bekannt, mittels einer Vorverarbeitungsstufe vor der eigentlichen Auswertung der erfassten Bilddaten solche Bereiche der aufgenommenen Bilder zu identifizieren, die von besonderem Interesse sind. Derartige interessierende Bereiche werden in der Regel als "Regions of Interest" (ROI) bezeichnet.
Nachdem mittels der Vorverarbeitungsstufe die ROIs definiert wurden, kann man sich im Rahmen der eigentlichen Auswerteschaltung darauf beschränken, nur die erfassten Bilddaten dieser ROIs zu verarbeiten, was entsprechend weniger Rechenleistung erfordert als die Verarbeitung der vollständigen, vom optischen Sensor bzw. von der Kamera aufgenommenen Bilder.

Gemäß Stand der Technik werden die ROIs über eine Vorverarbeitung der kompletten erfassten Bilddaten ermittelt, wobei hier aufgrund des hohen Bilddatenstroms einfache Algorithmen zur Anwendung gelangen, die beispielsweise nur feststellen, ob der Grauwert eines Pixels oberhalb eines vorgegebenen Schwellwerts liegt. Wenn dies der Fall ist, wird das überprüfte Pixel einer ROI zugeordnet, anderenfalls wird es bei der weiteren Auswertung nicht berücksichtigt. Derartige Algorithmen sind unter anderem mit dem Nachteil behaftet, dass die jeweilige Bedingung, im vorstehend genannten Beispiel das Überschreiten eines vorgegebenen Schwellwerts, nicht zuverlässig immer erfüllt wird, da beispielsweise ein zu erfassendes, interessierendes Objekt nicht zwangsläufig immer heller ist als der das Objekt umgebende Hintergrund. In derartigen Fällen können die genannten Algorithmen nicht oder nur eingeschränkt zur Anwendung gelangen.

Dokument EP-A-1 431 707 offenbart einen oberhalb eines segmentierten Fördermittels angeordneten Sensor, welcher beispielsweise als Kamera oder als Laserscanner ausgebildet sein kann. Der Sensor ist unter anderem dazu ausgelegt, Abstandswerte zwischen auf dem Fördermittel transportierten Objekten und dem Sensor zu ermitteln, um auf diese Weise das transportierte Objekt zu vermessen.

Aus Patent Abstracts of Japan, Bd. 1998, Nr. 13, Veröffentlichungsnummer JP-A-10 210354 ist es bekannt, bei einer Kamera eine Auswerteschaltung vorzusehen, welche aus dem Abstand zum aufzunehmenden Objekt und der Brennweite des Kameraobjektivs den Vergrößerungsfaktor des jeweils erfassten Bildes berechnet.

Das Dokument WO 02/07904 A1 offenbart ein Verfahren zur Verarbeitung von postalischen Schriftstücken, im Rahmen dessen interessierende Bereiche auf der Oberfläche der Schriftstücke aufgrund von Farbunterschieden ermittelt werden.

Dokument EP 0 984 382 A2 offenbart eine Anordnung, bei der zwei Barcodeleser bewegte Objekte unter verschiedenen Blickwinkeln erfassen.

Eine Aufgabe der Erfindung besteht darin, eine Vorrichtung und ein Verfahren der eingangs genannten Art derart weiterzubilden, dass die interessierenden Bereiche (ROIs) innerhalb des Gesichtsfelds eines optischen Sensors mit möglichst hoher Zuverlässigkeit ermittelt werden können, wobei es bei bestimmten Erfindungsvarianten auch möglich sein soll, Zusatzinformationen zu generieren, die die interessierenden Bereiche (ROIs) oder die Gesamtobjekte betreffen.

Diese Aufgabe wird gemäß einer ersten Erfindungsvariante gelöst durch eine Vorrichtung mit den Merkmalen des Anspruchs 1.

Weiterhin wird diese Aufgabe gemäß der ersten Erfindungsvariante gelöst durch ein Verfahren mit den Merkmalen des Anspruchs 20.

Erfindungsgemäß werden also die vom optischen Sensor ermittelten Bilddaten überhaupt nicht zur Bestimmung der ROIs herangezogen, vielmehr wird für die Ermittlung der ROIs ein separates Gerät, nämlich ein Entfernungsmesser, eingesetzt, welcher dazu in der Lage ist, seine Entfernung von den ihm zugewandten Objektoberflächen zu bestimmen. Wenn dann weiterhin der Abstand zwischen dem Entfernungsmesser und der Fläche, auf der die zu erfassenden Objekte aufliegen, bekannt sind, können problemlos die Positionen derjenigen vom Entfernungsmesser erfassten Bereiche bestimmt werden, bei denen der ermittelte Abstand nicht mit dem Abstand zum Hintergrund übereinstimmt. Bei diesen Bereichen handelt es sich dann um ROIs, in denen ein Objekt vorhanden ist. Die auf die erfindungsgemäße Weise bestimmte Positionsinformation der ROIs kann dann dafür verwendet werden, im Rahmen der Auswerteschaltung nur noch diejenigen vom optischen Sensor erfassten Bildinhalte auszuwerten, die den zuvor bestimmten ROIs zugeordnet sind.
Weiterhin wird erfindungsgemäß aus den vom Entfernungsmesser gelieferten Abständen die Auflösung oder der Vergrößerungsfaktor der vom optischen Sensor erfassten Bilder berechnet, so dass bei einer Weiterverarbeitung der ROIs beispielsweise bekannt ist, mit welcher dpi-Auflösung die vom optischen Sensor erfassten Bilder vorliegen. Wenn dann z.B. in den ROIs vorhandene Buchstaben oder Ziffern, die auf den erfassten Objekten jeweils definierte Absolutgrößen aufweisen, mittels automatisierter Bildverarbeitungsalgorithmen erkannt werden sollen, steht dem jeweiligen Bildverarbeitungsalgorithmus eine Information dahingehend zur Verfügung, welche Größe, gemessen in Pixeln der erfassten Bilder, die zu erkennenden Buchstaben oder Ziffern besitzen. Hierdurch kann die Effizienz des jeweiligen Bildverarbeitungsalgorithmus verbessert werden.

Bei der gemäß allen Varianten der Erfindung eingesetzten Auswerteschaltung kann es sich um ein separates Bauteil, aber auch um einen Bestandteil des optischen Sensors oder des Entfernungsmessers handeln. Die Auswerteschaltung kann bei der ersten Erfindungsvariante eine einzelne Komponente darstellen, die sowohl die interessierenden Bereiche als auch die Auflösung bzw. den Vergrößerungsfaktor berechnet. Alternativ können für die Berechnung der interessierenden Bereiche einerseits und die Berechnung der Auflösung bzw. des Vergrößerungsfaktors andererseits auch separate, räumlich voneinander entfernte Komponenten der Auswerteschaltung eingesetzt werden.

Da beim erfindungsgemäßen Einsatz eines Entfernungsmessers, welcher das Remissionsverhalten nicht berücksichtigt, die Bestimmung des Abstandes zwischen dem erfindungsgemäß vorgesehenen Entfernungsmesser und den abzutastenden Objektoberflächen vollkommen unabhängig von dem Reflexionsvermögen, der Beschaffenheit und der Farbe der Objektoberflächen sowie des die Objekte umgebenden Hintergrundes ist, kann mit dieser erfindungsgemäßen Variante mit sehr hoher Zuverlässigkeit festgestellt werden, wo sich zu erfassende Objekte befinden, ohne dass hierfür in relevanter Weise Rechenkapazität der Auswerteschaltung beansprucht wird. Dieser Vorteil gilt auch für die nachfolgend noch erläuterte zweite Erfindungsvariante.

Die Rechenleistung der Auswerteschaltung kann bei allen erfindungsgemäßen Varianten so ausgelegt werden, dass sie dazu in der Lage ist, die Bilddaten der ROIs in der jeweils erforderlichen Geschwindigkeit, ggf. in Echtzeit, zu verarbeiten. Eine höhere Rechenleistung ist nicht erforderlich, da die ROIs - wie erwähnt - erfindungsgemäß gewissermaßen ohne Beanspruchung der Rechenkapazität der Auswerteschaltung bestimmt werden können.

Bevorzugt ist die Auswerteschaltung zur in Abhängigkeit von den ermittelten Abständen erfolgenden Bestimmung der Geometrie der Objekte ausgelegt. In diesem Fall kann dann zum Zweck einer geeigneten Weiterverarbeitung neben dem Vergrößerungsfaktor bzw. der Auflösung auch noch eine Information über die Größe der erfassten Objekte bzw. über deren Form zur Verfügung gestellt werden. Insbesondere kann über die Auswerteschaltung in Abhängigkeit von den ermittelten Abständen auch das Volumen eines jeden erfassten Objektes bestimmt werden.

Die vorstehend genannte Aufgabe kann gemäß einer zweiten Erfindungsvariante auch gelöst werden durch eine Vorrichtung mit den Merkmalen des Anspruchs 5.

Gemäß der zweiten Erfindungsvariante werden zwei oder mehr optische Sensoren eingesetzt, um die Objekte unter verschiedenen Blickwinkeln zu erfassen. Dies ist beispielsweise insbesondere dann vorteilhaft, wenn zu erfassende ROIs auf einer einem Sensor abgewandten Objektoberfläche angeordnet sind. Derartige ROIs können dann durch den zumindest einen weiteren Sensor erfasst werden, so dass durch den Einsatz mehrerer Sensoren die zuverlässige Erfassung von ROIs unabhängig von der Ausrichtung und Position der Objekte auf einem Fördermittel sichergestellt werden kann.

Bei der Verwendung mehrerer optischer Sensoren können deren optische Achsen senkrecht zueinander stehen. Auf diese Art und Weise können beispielsweise insgesamt drei Sensoren vorgesehen werden, von denen einer von oben und die anderen beiden von jeweils einer Seite auf Objekte blicken, die entlang eines Fördermittels bewegt werden.

Die optischen Achsen der optischen Sensoren können senkrecht oder schräg zur Bewegungsrichtung der Objekte verlaufen. Wenn beispielsweise die optische Achse eines Sensors einen Winkel von ungefähr 45° zur Bewegungsrichtung der Objekte aufweist, ist ein solcher optischer Sensor dazu in der Lage, beispielsweise gleichzeitig zwei Seiten eines quaderförmigen Objektes zu erfassen, welches auf einem Fördermittel so ausgerichtet ist, dass sich zwei einander gegenüberliegende Seiten dieses Objekts im Wesentlichen parallel zur Bewegungsrichtung des Objekts erstrecken.

Um sicherzustellen, dass zumindest ein Sensor von oben auf die bewegten Objekte blickt, kann die optische Achse eines optischen Sensors senkrecht zur Förderebene verlaufen.

Vorteilhaft ist es, wenn die mehreren optischen Sensoren über ein Datennetzwerk mit einer oder mehreren Auswerteschaltungen verbunden sind. Dies ermöglicht, dass beispielsweise eine Auswerteschaltung die Daten mehrerer Sensoren verarbeitet oder dass beispielsweise bei einem besonders hohen Datendurchsatz zwei oder mehr Auswerteschaltungen gemeinsam die Daten eines optischen Sensors verarbeiten. Darüber hinaus können beim Betrieb der erfindungsgemäßen Vorrichtung in diesem Fall auch wechselnde Zuordnungen zwischen den optischen Sensoren und den Auswerteschaltungen vorgenommen werden.

Insbesondere ist es möglich, jedem optischen Sensor jeweils eine eigene Auswerteschaltung zuzuordnen, was die Geschwindigkeit der Gesamtvorrichtung erhöht und insbesondere eine Echtzeitverarbeitung der erfassten Daten ermöglicht.

Die mehreren optischen Sensoren können über ein Datennetzwerk sternförmig mit der oder den Auswerteschaltungen verbunden werden. Alternativ ist es jedoch auch möglich, in jeweils einem Netzwerkzweig einen optischen Sensor und eine ihm zugeordnete Auswerteschaltung vorzusehen, wobei die Ausgänge der genannten Auswerteschaltungen auf einem gemeinsamen Netzwerkknotenpunkt geführt sind, welcher wiederum mit einer Weiterverarbeitungsstation verbunden ist. Letztgenannte Variante hat gegenüber einer sternförmigen Vernetzung den Nachteil, dass eine Auswerteschaltung immer nur auf die Daten des im selben Netzwerkzweig angeordneten optischen Sensors zugreifen kann.

Jede erfindungsgemäß vorgesehene Auswerteschaltung kann zur automatisierten Decodierung von Schriftzeichen und/oder zur optischen Darbietung von Bildbereichen mit nicht automatisiert decodierbaren Schriftzeichen ausgelegt sein. Wenn beide vorstehend genannten Varianten gleichzeitig realisiert werden, ist es möglich, mittels der Auswerteschaltung zuerst die automatisiert decodierbaren Schriftzeichen zu decodieren und anschließend die nicht automatisiert decodierbaren Schriftzeichen optisch darzubieten, damit diese von einer Bedienperson visuell erkannt werden können. Nach einer solchen Erkennung können die erkannten Schriftzeichen dann beispielsweise über ein Eingabemedium von der Bedienperson manuell eingegeben und an die Auswerteschaltung übermittelt werden, so dass die Auswerteschaltung letztlich sowohl die automatisiert decodierbaren Schriftzeichen als auch die nicht automatisiert decodierbaren Schriftzeichen zum Zwecke der Weiterverarbeitung zur Verfügung hat.

Besonders vorteilhaft ist es, insbesondere bei einer sternförmigen Vernetzung, wenn zumindest eine Auswerteschaltung zur optischen Darbietung von von verschiedenen optischen Sensoren gelieferten Bildbereichen ausgelegt ist. Wenn in diesem Fall beispielsweise eine Bedienperson ein Schriftzeichen aufgrund der von einem optischen Sensor gelieferten Daten nicht erkennen kann, besteht die Möglichkeit, sich optisch die Daten eines weiteren Sensors darbieten zu lassen, welcher ein Objekt beispielsweise unter einem anderen Blickwinkel sieht, unter dem das zu erkennende Schriftzeichen besser lesbar ist.

Die nachfolgend beschriebenen bevorzugten Ausführungsformen der Erfindung lassen sich sowohl im Rahmen der ersten Erfindungsvariante als auch im Rahmen der zweiten Erfindungsvariante umsetzen.

Ein erfindungsgemäß eingesetzter Entfernungsmesser kann aus einer oder mehreren Einheiten bestehen und muss dazu in der Lage sein, Abstände zu unterschiedlichen Punkten der Oberfläche der zu erfassenden Objekte zu bestimmen. Zusätzlich zu den Abständen müssen dann den jeweiligen Abstandswerten zugeordnete Positionsinformationen bekannt bzw. ermittelbar sein, damit bestimmt werden kann, an welchen Orten Objektbereiche vorhanden sind, um diese Bereiche im Folgenden als ROIs berücksichtigen zu können.

Eine besonders genaue Arbeitsweise der erfindungsgemäßen Vorrichtung lässt sich erreichen, wenn der Entfernungsmesser oder eine Anordnung aus mehreren Entfernungsmessern dazu in der Lage ist, die Abstandswerte zu möglichst vielen, möglicht dicht beieinanderliegenden Punkten der Objektoberflächen zu bestimmen, wobei es besonders vorteilhaft ist, wenn ein vollständiges Abtasten der Objektoberflächen ermöglicht wird.

Besonders bevorzugt ist es, wenn der erfindungsgemäß eingesetzte Entfernungsmesser selbst nicht nur zur Bestimmung von Abständen sondern zusätzlich auch zur Bestimmung zugehöriger Positionsinformationen ausgelegt ist. Dementsprechend wird der Entfernungsmesser bevorzugt als Scanner, insbesondere als Laserscanner ausgeführt. Ein Scanner, der als Linien- oder Flächenscanner ausgeführt sein kann, ermöglicht das vollständige Abtasten von Objekten, wobei zu jedem ermitteltem Abstandswert beispielsweise in Form von Polarkoordinaten vorliegende Positionsinformationen ermittelbar sind. Vorteilhaft ist ferner, dass derartige Scanner handelsübliche Geräte darstellen, so dass mit ihnen eine erfindungsgemäße Vorrichtung wirtschaftlich realisiert werden kann.

Ein erfindungsgemäß eingesetzter Laserscanner ist bevorzugt zur Aussendung eines periodisch innerhalb einer Abtastebene bewegten Laserstrahls ausgelegt. Wenn ein zu erfassendes Objekt durch diese Abtastebene hindurchbewegt wird, ist es möglich, das Objekt vollständig abzutasten und ein dreidimensionales Höhenprofil des Objektes zu ermitteln. Die Position dieses Höhenprofils in der gesamten abgetasteten Fläche entspricht dann einer ROI.
Die Abtastebene des Laserscanners kann sich senkrecht oder schräg zur Bewegungsrichtung der Objekte erstrecken. Wichtig ist lediglich, dass die Abtastebene relativ zu den zu erfassenden Objekten so orientiert ist, dass der Laserstrahl sämtliche, dem Laserscanner zugewandte Objektoberflächen erreichen kann.

Vorteilhaft ist es, wenn das Messgerät nicht nur Abstände und zugehörige Positionsinformationen, sondern zusätzlich auch noch das Remissionsverhalten der erfassten Objektbereiche bestimmen kann. In diesem Fall wird es z.B. möglich, die erfindungsgemäß festgelegten ROIs in Abhängigkeit vom ermittelten Remissionsverhalten noch weiter zu segmentieren und innerhalb der ROIs besonders interessante Bereiche festzulegen. Bei der weiteren Auswertung können dann beispielsweise nur noch diese besonders interessanten Bereiche untersucht werden. Konkret kann beispielsweise durch die Untersuchung des Remissionsverhaltens einer ermittelten ROI innerhalb dieser ROI festgestellt werden, an welcher Stelle sich ein Code, beispielsweise ein Barcode, befindet. Die Auswerteschaltung kann sich dann darauf beschränken, ausschließlich denjenigen Bereich zu untersuchen, in dem sich der Code befindet, was entsprechend weniger Rechenleistung benötigt als die Untersuchung der kompletten, als ROI bestimmten Objektoberfläche. Gemäß der erläuterten bevorzugten erfindungsgemäßen Variante werden also die letztlich besonders interessierenden und weiter zu verarbeitenden Bereiche in Abhängigkeit von den ermittelten Abständen und dem ermittelten Remissionsverhalten berechnet.

Vorteilhaft ist ferner, wenn die Auswerteschaltung in der Weise zur Berücksichtigung des Schärfentiefebereichs des optischen Sensors ausgelegt ist, dass nur solche interessierende Bereiche ermittelbar sind, in denen sich die Objektoberfläche im Schärfentiefebereich des optischen Sensors befindet. Diese Variante kann ohne weiteres realisiert werden, wenn der Auswerteschaltung die dem Schärfentiefebereich entsprechenden Abstandswerte bekannt sind, da in diesem Fall all diejenigen Bereiche der Objektoberfläche bei der Auswertung unberücksichtigt bleiben können, deren Abstände zum Entfernungsmesser außerhalb des Schärfentiefebereichs des optischen Sensors liegen. Auf diese Art und Weise lässt sich die benötigte Rechenleistung der Auswerteschaltung noch weiter reduzieren, da bei der Auswertung auch innerhalb von ROIs liegende Bereiche der Objektoberflächen unberücksichtigt bleiben können, wenn sie sich außerhalb des Schärfentiefebereichs befinden. Rechenleistung wird nur für diejenigen Objektoberflächenbereiche benötigt, die zum einen innerhalb einer ermittelten ROI und zum anderen auch innerhalb des Schärfentiefebereichs liegen.

Der im Rahmen der Erfindung eingesetzte optische Sensor kann zum Beispiel als Kamera, insbesondere als Zeilen- oder Matrixkamera oder auch als Barcodescanner ausgebildet werden. Besonders vorteilhaft ist es, wenn eine Zeilenkamera in Verbindung mit einem als Laserscanner ausgebildeten Entfernungsmesser eingesetzt wird, da die Abtast- bzw. Erfassungsebenen beider Vorrichtungen dann so zueinander ausgerichtet werden können, dass sie die Objekte innerhalb ihrer jeweiligen Gesichtsfelder an jeweils gleichen Positionen erfassen, so dass die über den Laserscanner ermittelten Positionen der ROIs direkt als Positionsinformationen für die Zeilenkamera weiterverarbeitet werden können, ohne dass eine Transformation zwischen verschiedenen Koordinatensystemen beider Geräte erfolgen muss. Ebenso ist es jedoch auch möglich, den optischen Sensor und den Entfernungsmesser in ein einziges Gerät mit gemeinsamem Gehäuse zu integrieren, so dass eine vor Ort erfolgende Ausrichtung von optischem Sensor und Entfernungsmesser zueinander entfallen kann. Weiterhin wird in diesem Fall dann ebenfalls die vorstehend erwähnte Transformation eingespart.

Die erfindungsgemäß durch das Gesichtsfeld des optischen Sensors bewegten Objekte können mittels einer Fördereinrichtung, insbesondere mittels eines Förderbandes bewegt werden. Die Fördereinrichtung wird dabei bevorzugt mit konstanter Geschwindigkeit betrieben. Der erfindungsgemäß eingesetzte Entfernungsmesser kann dabei oberhalb der Fördereinrichtung, aber auch seitlich der Fördereinrichtung angebracht werden, je nachdem, ob Oberflächen oder Seitenflächen von Objekten erfasst werden sollen.

Wenn über den erfindungsgemäß eingesetzten Entfernungsmesser die Position von ROIs bestimmt werden, kann über die Geschwindigkeit der Fördereinrichtung sowie den Abstand zwischen den Gesichtsfeldern bzw. Abtastebenen von Entfernungsmesser und optischem Sensor auf einfache Weise berechnet werden, zu welchem Zeitpunkt sich die über den Entfernungsmesser ermittelte ROI im Gesichtsfeld des optischen Sensors befindet und wo die ermittelte ROI innerhalb dieses Gesichtsfelds liegt.

Für eine Echtzeit-Bildverarbeitung ist es nötig, den Entfernungsmesser dem optischen Sensor in Förderrichtung vorzuschalten oder beide Geräte in einem einzigen Gehäuse zu integrieren, da die Positionen der ROIs in diesem Fall bereits bekannt sein müssen, wenn oder kurz nachdem die Objekte in das Gesichtsfeld des optischen Sensors gelangen. Falls keine Echtzeitverarbeitung benötigt wird, ist es grundsätzlich auch möglich, den Entfernungsmesser dem optischen Sensor in Förderrichtung der Objekte nachzuschalten.

Die Auswerteschaltung kann erfindungsgemäß zusätzlich zur in Abhängigkeit von den ermittelten Abständen erfolgenden Bestimmung der Geometrie der Objekte ausgelegt werden. Aus diesen Informationen kann dann bei Bedarf auch das Volumen der erfassten Objekte berechnet werden. Bei vielen in der Praxis vorhandenen Anwendungen werden ohnehin Laserscanner eingesetzt, um die Volumina von an diesen Laserscannern vorbeigeförderten Objekten zu bestimmen. Bei derartigen Anwendungsfällen ist die erfindungsgemäße Vorrichtung besonders wirtschaftlich einsetzbar, da kein apparativer Zusatzaufwand betrieben werden muss, sondern die Realisierung einer erfindungsgemäßen Vorrichtung lediglich durch eine Umprogrammierung der ebenfalls regelmäßig entweder innerhalb des Laserscanners oder als separates Bauteil vorhandenen Auswerteschaltung erfolgen kann.

Von Vorteil ist ferner, wenn eine in Abhängigkeit von den ermittelten Abständen beaufschlagte Kamera-Fokussiereinrichtung vorgesehen wird. Auf diese Weise kann sichergestellt werden, dass eine als optischer Sensor eingesetzte Kamera immer auf die jeweils interessierende Objektoberfläche fokussiert ist.

Ferner kann eine Objektbeleuchtungseinrichtung vorgesehen werden, die über die Auswerteschaltung derart ansteuerbar ist, dass ROIs beleuchtet und nicht interessierende Bereiche nicht beleuchtet werden. Durch eine derartige, selektive Beleuchtung werden die Lichtquellen der Objektbeleuchtungseinrichtung weniger belastet, so dass sich deren Lebensdauer erhöhen lässt. Ebenso ist es jedoch möglich, die Objektbeleuchtungseinrichtung über die Auswerteschaltung so anzusteuern, dass ROIs stärker beleuchtet werden als nicht interessierende Bereiche. Durch eine derart erhöhte Beleuchtungsstärke im Bereich der ROIs lässt sich die Bildqualität der vom optischen Sensor erfassten Bilder oder beispielsweise auch die Leserate eines eingesetzten Barcodescanners erhöhen. Dadurch dass nicht interessierende Bereiche weniger stark beleuchtet werden, werden die Lichtquellen insgesamt durch die gesamte Maßnahme nicht stärker belastet, so dass deren Lebensdauer durch die erhöhte Beleuchtungsstärke im Bereich der ROIs nicht negativ beeinflusst wird.

Die vorstehend erläuterten Varianten der Ansteuerung der Objektbeleuchtungseinrichtung lassen sich besonders vorteilhaft dann einsetzen, wenn die Lichtquellen der Objektbeleuchtungseinrichtung als LEDs ausgeführt sind. Hier wirken sich die erläuterten Maßnahmen besonders vorteilhaft aus, da die Lebensdauer von LEDs grundsätzlich begrenzt ist.

Erfindungsgemäß ist es weiterhin von Vorteil, wenn der optische Sensor und/oder die Auswerteschaltung mit einer Datenschnittstelle ausgestattet werden, die zur Übertragung der auf interessierende Bereiche bezogenen Daten an ein externes Gerät geeignet ist. Ein solches externes Gerät kann beispielsweise zur automatisierten Decodierung von Schriftzeichen und/oder zur optischen Darbietung von Bildbereichen mit automatisiert nicht decodierbaren Schriftzeichen geeignet sein.
Durch die genannte Datenschnittstelle wird es möglich, den Umfang der an ein externes Gerät zur weiteren Verarbeitung übertragenen Daten auf das notwendige Minimum zu reduzieren, so dass das externe Gerät bei der Weiterverarbeitung dieser Daten nicht unnötig, sondern nur in dem jeweils erforderlichen Umfang belastet wird. Besonders vorteilhaft ist dies beispielsweise dann, wenn das externe Gerät dazu ausgelegt ist, einer Person solche Bildbereiche visuell darzubieten, die nicht automatisiert decodiert werden konnten, da in diesem Fall die genannte Person nicht damit belastet wird, Bildbereiche zu betrachten, die keine zu decodierende Information oder die bereits zuvor automatisiert decodierte Schriftzeichen darstellen.

Beim Einsatz der genannten Datenschnittstelle ist es besonders bevorzugt, wenn der optische Sensor und/oder die Auswerteschaltung mit einer Komprimierungsstufe zur Komprimierung der auf interessierende Bereiche bezogenen, über die Datenschnittstelle zu übertragenden Daten ausgestattet ist. Mit einer derartigen Komprimierungsstufe kann die Menge der zu einem externen Gerät zu übertragenden Daten nach einer Beschränkung auf die interessierenden Bereiche noch zusätzlich reduziert werden. Besonders wünschenswert ist es dabei, wenn die Komprimierungsstufe zur Komprimierung von auf interessierende Bereiche bezogenen Bilddaten bereits während der Erfassung des jeweiligen Bildes ausgelegt ist. Auf diese Weise erfolgt die Komprimierung praktisch zum frühest möglichen Zeitpunkt, da sie zumindest großteils bereits während der Bilderfassung abläuft, so dass die Daten auch zu einem sehr frühen Zeitpunkt am externen Gerät zur Verfügung stehen, was letztlich zur Folge hat, dass für die Weiterverarbeitung durch das externe Gerät mehr Zeit vorhanden ist.

Die Komprimierung während der Erfassung kann nach unterschiedlichen Verfahren ablaufen:

Bei Auslegung des optischen Sensors als Zeilenkamera ist es beispielsweise möglich, jede vollständig empfangene, auf einen interessierenden Bereich bezogene Bildzeile unmittelbar nach deren Erfassung zu komprimieren.

Alternativ ist es möglich, eine vorbestimmte Anzahl von vollständig empfangenen, auf einen interessierenden Bereich bezogenen Bildzeilen unmittelbar nach der Erfassung der genannten Anzahl von Bildzeilen zu komprimieren.
Schließlich ist es beispielsweise auch möglich, eine vorbestimmte Anzahl von empfangenen, auf einen interessierenden Bereich bezogenen Pixeln einer oder mehrerer Bildzeilen unmittelbar nach der Erfassung der genannten Anzahl von Pixeln zu komprimieren.
Andere Ausführungsvarianten sind ebenfalls denkbar.

Weitere bevorzugte Ausführungsformen der Erfindung sind in den abhängigen Ansprüchen angegeben.

Die Erfindung wird nachfolgend anhand von Ausführungsbeispielen unter Bezugnahme auf die Zeichnungen beschrieben; in diesen zeigen:
- Fig. 1: ein dreidimensionales Prinzipschaubild einer erfindungsgemäßen Vorrichtung,
- Fig. 2: eine Draufsicht auf ein Förderband gemäß Fig. 1,
- Fig. 3: eine weitere Draufsicht auf das Förderband gemäß Fig. 1 mit besonders interessierenden Objektbereichen,
- Fig. 4: eine Seitenansicht einer Kamera sowie eines Objektes mit Kennzeichnung des Schärfentiefebereichs der Kamera,
- Fig. 5a, b: Draufsichten auf ein Objekt gemäß Fig. 4,
- Fig. 6: eine weitere Draufsicht auf ein Förderband gemäß Fig. 1 mit besonders gekennzeichneten beleuchteten Bereichen,
- Fig. 7: eine Darstellung gemäß Fig. 1 mit insgesamt drei Sensoren,
- Fig. 8: eine vernetzte Anordnung von erfindungsgemäßen Komponenten gemäß einer ersten Ausführungsform, und
- Fig. 9: eine vernetzte Anordnung von erfindungsgemäßen Komponenten gemäß einer zweiten Ausführungsform.

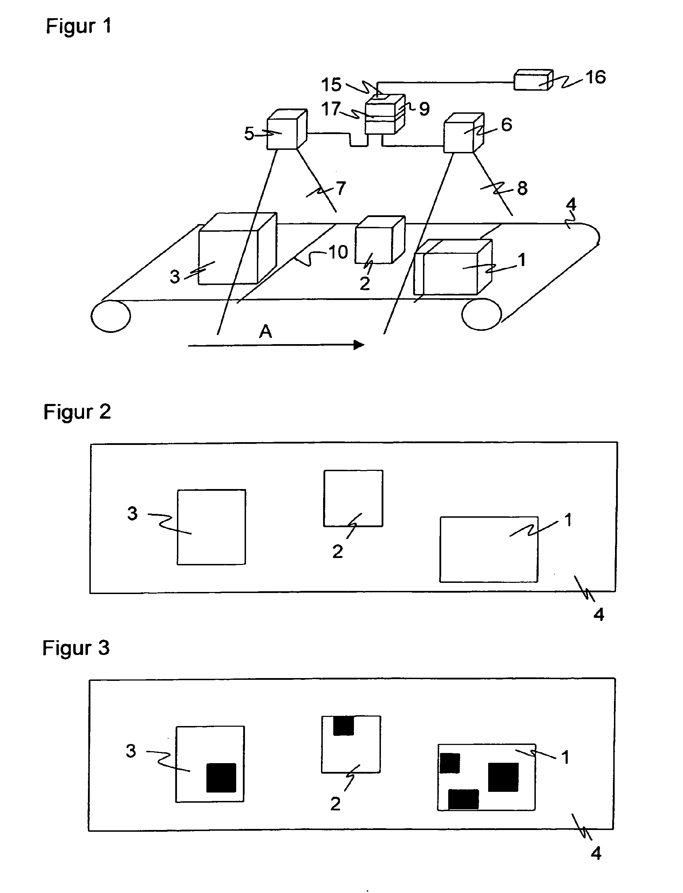

Fig. 1 zeigt drei Objekte 1, 2, 3, welche sich auf einem Förderband 4 befinden, das die Objekte 1, 2, 3 in Richtung des Pfeils A transportiert. Oberhalb des Förderbandes 4 sind in Förderrichtung A nacheinander ein Laserscanner 5 sowie eine Zeilenkamera 6 montiert.

Beim Laserscanner 5 handelt es sich um einen Linienscanner, welcher dazu geeignet ist, periodisch einen innerhalb einer Abtastebene 7 bewegten Laserstrahl auszusenden. Die Abtastebene 7 erstreckt sich dabei senkrecht zur Förderrichtung A. Der Laserscanner 5 ist gegenüber dem Förderband 4 so positioniert, dass der ausgesandte Laserstrahl das Förderband 4 über etwas mehr als seine gesamte Breite abtastet, so dass sämtliche Objekte, die sich auf dem Förderband 4 befinden, vom Laserscanner 5 erfasst werden können.

In entsprechender Weise ist das V-förmige, innerhalb einer Ebene 8 liegende Gesichtsfeld der Zeilenkamera 6 so ausgerichtet, dass alle auf dem Förderband 4 unter der Zeilenkamera 6 vorbei geförderten Objekte von der Zeilenkamera 6 erfasst werden können. Die Ebene 8 des Gesichtsfeldes der Zeilenkamera 6 erstreckt sich dabei parallel zur Abtastebene 7 des Laserscanners 5 und senkrecht zur Förderrichtung A.

Laserscanner 5 und Zeilenkamera 6 sind mit einer Steuer- und Auswerteschaltung 9 verbunden, welche zum einen dazu geeignet ist, Laserscanner 5 und Zeilenkamera 6 in der erfindungsgemäß nötigen Weise anzusteuern und zum anderen auch für eine Auswertung der von Laserscanner 5 und Zeilenkamera 6 gelieferten Daten sorgt.

Der Steuer- und Auswerteschaltung 9 sind die Abstände des Laserscanners 5 zur Förderebene des Förderbandes 4 bezüglich all derjenigen Punkte bekannt, in denen die Abtastebene 7 des Laserscanners 5 diese Förderebene schneidet. Die entsprechende Schnittlinie ist in Fig. 1 mit dem Bezugszeichen 10 gekennzeichnet. Wenn nun die Steuer- und Auswerteschaltung 9 vom Laserscanner 5 nur Abstände geliefert bekommt, die diesen bekannten Abständen zur Förderebene entsprechen, ist der Steuer- und Auswerteschaltung bekannt, dass sich kein Objekt innerhalb der Abtastebene 7 befindet, so dass zum entsprechenden Zeitpunkt in der Abtastebene 7 keine ROI vorliegt. Liefert der Laserscanner 5 hingegen Abstandsdaten, die von den bekannten Abstandsdaten zwischen Laserscanner 5 und Förderebene abweichen, so existiert an denjenigen Positionen, an denen die genannten Abweichungen auftreten, Objektoberflächen, die nicht mit der Förderebene zusammenfallen, sondern die sich näher am Laserscanner 5 befinden als die Förderebene. Diese Positionen werden dann von der Steuer- und Auswerteschaltung 9 einer ROI zugeordnet.

Somit kann mittels des Laserscanners 5 und der Steuer- und Auswerteschaltung 9 festgestellt werden, an welchen Positionen des Förderbands 4 sich Objekte 1, 2, 3 befinden. Aus der Fördergeschwindigkeit und dem Abstand zwischen der Abtastebene 7 und der Gesichtsfeldebene 8 der Zeilenkamera 6 kann dann problemlos berechnet werden, wann sich die vom Laserscanner 5 erfassten Objekte 1, 2, 3 in der Gesichtsfeldebene 8 der Zeilenkamera 6 befinden und an welcher Position innerhalb dieser Gesichtsfeldebene 8 sich die Objekte 1, 2, 3 aufhalten. Die von der Zeilenkamera 6 an die Steuer- und Auswerteschaltung 9 gelieferten Daten werden in der Folge nur dann ausgewertet, wenn sie einer ROI zugeordnet sind. Bilddaten, die lediglich die Förderebene des Förderbands 4 ohne darauf befindliche Objekte 1, 2, 3 zeigen, werden erfindungsgemäß nicht interessierenden Bereichen zugeordnet und bei der Auswertung der Bilddaten nicht berücksichtigt.

Die Auswerteschaltung 9 ist mit einer Datenschnittstelle 15 ausgestattet, über die auf ROIs bezogene Daten an ein externes Gerät 16 übertragen werden können. Das externe Gerät 16 kann beispielsweise zur automatisierten Decodierung von Schriftzeichen geeignet sein.

Weiterhin ist die Auswerteschaltung 9 auch noch mit einer Komprimierungsstufe 17 ausgestattet, welche dazu geeignet ist, die auf ROIs bezogene Daten insbesondere bereits während deren Erfassung zu komprimieren, so dass diese dann mit reduziertem Umfang über die Datenschnittstelle 15 zum externen Gerät 16 übertragen werden können.

Schließlich wird erfindungsgemäß aus den vom Laserscanner 5 gelieferten Abständen die Auflösung oder der Vergrößerungsfaktor der von der Zeilenkamera 6 erfassten Bilder berechnet, so dass bei einer Weiterverarbeitung der ROIs beispielsweise bekannt ist, mit welcher dpi-Auflösung die von der Zeilenkamera 6 erfassten Bilder vorliegen. Hieraus ergeben sich dann die bereits erläuterten Vorteile.

Fig. 2 zeigt in Draufsicht die auf dem Förderband 4 transportierten Objekte 1, 2, 3. Die in der Draufsicht sichtbaren Objektoberflächen, die in Fig. 2 grau dargestellt sind, werden mit einer Vorrichtung gemäß Fig. 1 als ROIs klassifiziert, so dass die Steuer- und Auswerteschaltung 9 nur von der Zeilenkamera 6 gelieferte Bilddaten verarbeitet, die diesen ROIs zugeordnet sind.

Wie bereits erläutert, kann der Laserscanner 5 zusätzlich auch noch zur Bestimmung des Remissionsverhaltens der Objektoberflächen ausgelegt sein, um auf diese Weise beispielsweise die Positionen von auf den Objektoberflächen angebrachten Codes ermitteln zu können. Fig. 3 zeigt eine Fig. 2 entsprechende Darstellung, wobei hier jedoch nur solche besonders interessierenden Bereiche als schwarz gekennzeichnete ROIs dargestellt sind, in denen von der Zeilenkamera 6 gemäß Fig. 1 zu lesende Codes vorhanden sind. Es müssen also nicht die gesamten, aus Fig. 2 ersichtlichen Objektoberflächen bei einer Bildverarbeitung durch die Steuer- und Auswerteeinheit 9 berücksichtigt werden. Vielmehr genügt eine Auswertung der in Fig. 3 grau gekennzeichneten Bereiche der Objektoberflächen.

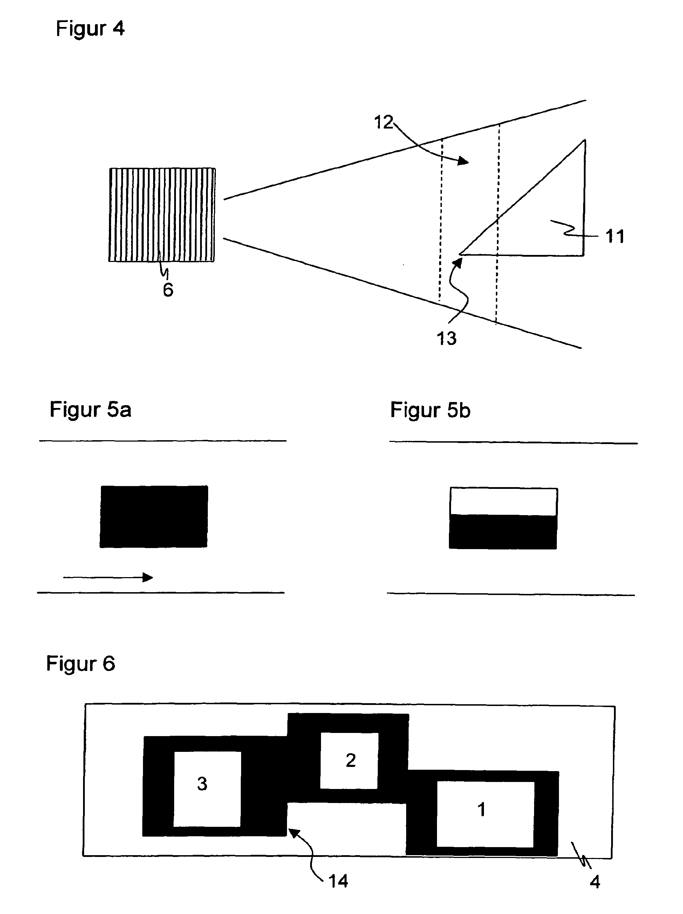

Fig. 4 zeigt in Seitenansicht eine Zeilenkamera 6, welche so ausgerichtet ist, dass sie zur Erfassung eines im Querschnitt dreieckigen Objekts 11 geeignet ist. Der Schärfentiefebereich der Zeilenkamera 6 ist mit 12 gekennzeichnet. Aus Fig. 4 ist ersichtlich, dass sich lediglich ein kleiner, der Zeilenkamera 6 zugewandter Bereich 13 des Objekts 11 im Schärfentiefebereich 12 der Zeilenkamera 6 befindet. Im Rahmen der Bildverarbeitung ist es dementsprechend sinnvoll, nur diejenigen vom Objekt 11 aufgenommenen Bilddaten zu verarbeiten, die von einem Objektoberflächenbereich herrühren, der sich innerhalb des Schärfentiefebereichs 12 befindet. Mittels des Laserscanners 5 kann der Abstand zwischen der Zeilenkamera und den ihr zugewandten Oberflächen des Objekts 11 vorab bestimmt werden, so dass dann in der Steuer- und Auswerteschaltung 9 letztlich nur diejenigen Bilddaten verarbeitet werden, die Objektoberflächenbereichen zugeordnet sind, welche sich im Schärfentiefebereich 12 befinden. Auf diese Weise lassen sich die zu verarbeitenden Bilddaten noch weiter reduzieren, was die Fig. 5a und 5b veranschaulichen.

Fig. 5a zeigt in dunkelgrauer Farbe alle Oberflächenbereiche des Objekts 11, die von der Zeilenkamera 6 gemäß Fig. 4 erfasst werden können, und zwar unabhängig davon, ob sie sich innerhalb des Schärfentiefebereichs 12 befinden oder nicht.

In Fig. 5b sind schwarz nur diejenigen Oberflächenbereiche dargestellt, welche dem Schärfentiefebereich 12 zugeordnet werden können. Alle anderen Oberflächenbereiche des Objekts 11 sind in weisser Farbe dargestellt. Gemäß dem bevorzugten erfindungsgemäßen Verfahren entsprechend Fig. 4 gelangen nur diejenigen Bilddaten zur weiteren Verarbeitung durch die Steuer- und Auswerteschaltung 9, die in Fig. 5b schwarz gekennzeichnet sind und die von Objektoberflächenbereichen herrühren, die sich innerhalb des Schärfentiefebereichs 12 der Zeilenkamera 6 befinden. Es ist also in Abhängigkeit vom Schärfentiefebereich 12 der Zeilenkamera 6 eine weitere Reduktion der über den Laserscanner 5 definierten ROIs möglich.

Fig. 6 zeigt nochmals das Förderband gemäß den Fig. 1 bis 4, wobei hier zusätzlich zu den Objekten 1, 2, 3 in Draufsicht schwarz schraffiert auch noch derjenige Bereich 14 gekennzeichnet ist, welcher mittels einer nicht dargestellten Objektbeleuchtungseinrichtung gezielt beleuchtet werden kann. Wie bereits erläutert, kann über die vom Laserscanner 5 ermittelten Daten eine Beleuchtungseinrichtung so angesteuert werden, dass im Wesentlichen nur die ROIs oder Bereiche, die etwas über die ROIs hinausgehen, beleuchtet werden. Der Beleuchtungsbereich 14 gemäß Fig. 6 wird nicht gleichzeitig beleuchtet. Vielmehr genügt es, im Wesentlichen streifenförmig immer nur denjenigen Bereich der Objekte 1, 2, 3 zu beleuchten, der sich innerhalb der Gesichtsfeldebene 8 der Zeilenkamera 6 gemäß Fig. 1 befindet. Die Länge und die Position des sich quer zur Förderrichtung A erstreckenden streifenförmigen Bereichs sind dabei abhängig von den über Laserscanner 5 und Steuer- und Auswerteschaltung 9 ermittelten ROIs.

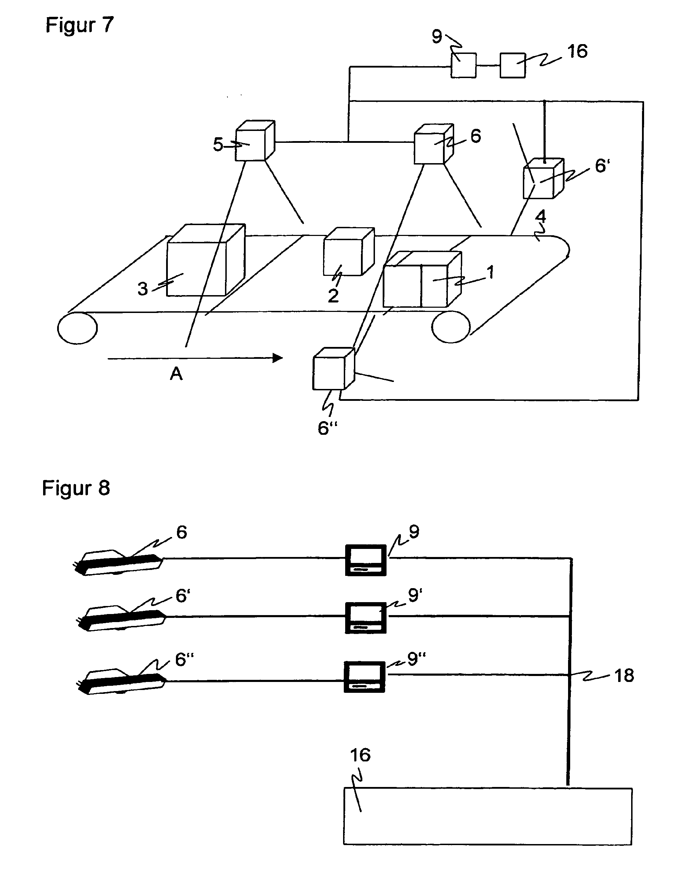

Fig. 7 zeigt analog zu Fig. 1 drei Objekte 1, 2, 3, die auf einem Förderband 4 in Richtung des Pfeils A transportiert werden. Oberhalb des Förderbands 4 sind in Förderrichtung A nacheinander ein Laserscanner 5 sowie insgesamt drei Zeilenkameras 6, 6', 6" montiert.

Die optischen Achsen der drei Zeilenkameras 6, 6', 6" verlaufen senkrecht zueinander, wobei sich die optische Achse der Zeilenkamera 6 senkrecht zur Ebene des Förderbands 4 und die optischen Achsen der Zeilenkameras 6' und 6" parallel zu der genannten Ebene erstrecken. Alle optischen Achsen der Zeilenkameras 6, 6', 6" verlaufen senkrecht zur Förderrichtung A. Somit blickt die Zeilenkamera 6 von oben und die Zeilenkameras 6', 6" von gegenüberliegenden Seiten auf die Objekte 1, 2, 3.

Laserscanner 5 und Zeilenkameras 6, 6', 6" sind mit einer Steuer- und Auswerteschaltung 9 verbunden, welche zum einen dazu geeignet ist, Laserscanner 5 und Zeilenkameras 6, 6', 6" in der erfindungsgemäß nötigen Weise anzusteuern und zum anderen auch für die Auswertung der von Laserscanner 5 und den Zeilenkameras 6, 6', 6" gelieferten Daten sorgt. Die Steuer- und Auswerteschaltung 9 ist dabei wiederum mit einem externen Gerät 16 verbunden, an welches die auf ROIs bezogenen Daten übermittelt werden können. Im Übrigen entspricht die Funktionsweise der Vorrichtung gemäß Fig. 7 der Funktionsweise derjenigen Vorrichtung, die in Fig. 1 gezeigt ist, mit dem einzigen Unterschied, dass gemäß Fig. 7 die von drei Zeilenkameras 6, 6', 6" gelieferten Daten zum Zweck der Weiterverarbeitung zur Verfügung stehen.

Fig. 8 zeigt in schematischer Darstellung ein Netzwerk, welches insgesamt drei Netzwerkzweige aufweist, in denen jeweils ein optischer Sensor 6, 6', 6" und eine ihm zugeordnete Auswerteschaltung 9, 9', 9" angeordnet sind. Die Ausgänge der Auswerteschaltungen 9, 9', 9" sind auf einen gemeinsamen Netzwerkknotenpunkt 18 geführt, welcher mit einer Weiterverarbeitungsstation bzw. einem externen Gerät 16 verbunden ist. Bei dem externen Gerät handelt es sich bevorzugt um einen Hostrechner, welcher die von den Auswerteschaltungen 9, 9', 9" gelieferten Daten verarbeitet.

Die Auswerteschaltungen 9, 9', 9" sind gemäß Fig. 8 derart ausgebildet, dass sie auch zur optischen Darbietung der von den optischen Sensoren 6, 6', 6" gelieferten Daten geeignet sind. Weiterhin besitzen sie jeweils ein Eingabemedium, über das von einer Bedienperson manuell erkannte Daten in die Auswerteschaltung 9, 9', 9" eingegeben werden können.

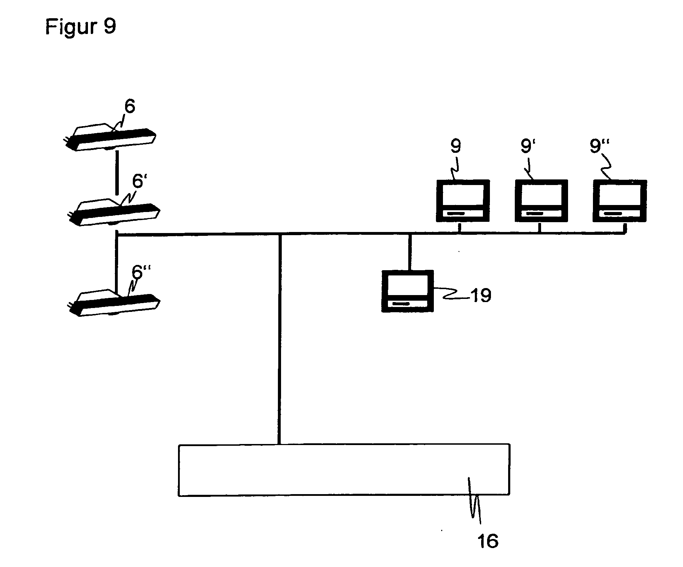

Fig. 9 entspricht im Wesentlichen Fig. 8 mit dem Unterschied, dass das Netzwerk hier nicht aus drei Netzwerkzweigen besteht, sondern vielmehr sternförmig aufgebaut ist. Zusätzlich ist noch ein Steuerrechner 19 vorgesehen, welcher für die Koordination der Datenflüsse und gegebenenfalls auch für die Zwischenspeicherung von Daten ausgelegt ist.

Vorteilhaft an einer Anordnung gemäß Fig. 9 ist die Tatsache, dass alle Komponenten 6, 6', 6", 9, 9', 9", 19 und 16 innerhalb des Netzwerks miteinander kommunizieren können. Dadurch werden die vorstehend bereits erläuterten Vorteile erreicht. Insbesondere wird es möglich, auf der Anzeigeeinheit einer beliebigen Auswerteschaltung 9, 9', 9" die von einem beliebigen der optischen Sensoren 6, 6', 6" erfassten Daten darzustellen.

Bei einer alternativen Ausführungsform der Anordnung gemäß Fig. 9 wäre es auch möglich, anstelle der drei Auswerteschaltungen 9, 9', 9" nur eine einzige Auswerteschaltung 9 vorzusehen, welche dann für die Daten aller optischen Sensoren 6, 6', 6" zuständig ist.

### Bezugszeichenliste

- 1: Objekt
- 2: Objekt
- 3: Objekt
- 4: Förderband
- 5: Laserscanner
- 6: Zeilenkamera
- 6': Zeilenkamera
- 6": Zeilenkamera
- 7: Abtastebene
- 8: Ebene
- 9: Steuer- und Auswerteschaltung
- 9': Steuer- und Auswerteschaltung
- 9": Steuer- und Auswerteschaltung
- 10: Schnittlinie
- 11: Objekt
- 12: Schärfentiefebereich
- 13: Beleuchtungsbereich
- 14: Beleuchtungsbereich
- 15: Datenschnittstelle
- 16: externes Gerät
- 17: Komprimierungsstufe
- 18: Netzwerkknotenpunkt
- 19: Steuerrechner

## Patentansprüche

1. Vorrichtung zur Erfassung von durch das Gesichtsfeld eines optischen Sensors (6, 6', 6") bewegten Objekten (1, 2, 3) mit einer Einrichtung zur Selektion von interessierenden Bereichen, die jeweils lediglich einem Teil des Gesichtfeldes des optischen Sensors (6, 6', 6") zugeordnet sind,
**dadurch gekennzeichnet ,**
**dass** ein Entfernungsmesser (5) in den optischen Sensor (6, 6', 6") integriert oder diesem in Bewegungsrichtung (A) der Objekte (1, 2, 3) vor- oder nachgeschaltet ist,
**dass** der Entfernungsmesser (5) zur Ermittlung der Abstände der dem Entfernungsmesser (5) zugewandten Objektoberflächen ausgelegt und mit einer Auswerteschaltung (9, 9', 9") zur Berechnung der interessierenden Bereiche in Abhängigkeit von den ermittelten Abständen gekoppelt ist,
**dass** die Auswerteschaltung (9, 9', 9") zur Verarbeitung nur derjenigen Bilddaten des Sensors (6, 6', 6") ausgelegt ist, welche den interessierenden Bereichen zugeordnet sind, und
**dass** die Auswerteschaltung (9, 9', 9") zur Ermittlung der Auflösung oder des Vergrößerungsfaktors der vom optischen Sensor (6, 6', 6") erfassten Bilder ausgelegt ist.

2. Vorrichtung nach Anspruch 1,
**dadurch gekennzeichnet ,**
**dass** die Auswerteschaltung (9, 9', 9") zur in Abhängigkeit von den ermittelten Abständen erfolgenden Bestimmung der Geometrie der Objekte (1, 2, 3) ausgelegt ist.

3. Vorrichtung nach einem der vorhergehenden Ansprüche,
**dadurch gekennzeichnet ,**
**dass** die Auswerteschaltung (9, 9', 9") zur in Abhängigkeit von den ermittelten Abständen erfolgenden Bestimmung der Volumina der Objekte (1, 2, 3) ausgelegt ist.

4. Vorrichtung nach einem der vorhergehenden Ansprüche,
**dadurch gekennzeichnet ,**
**dass** eine in Abhängigkeit von den ermittelten Abständen beaufschlagte Kamera-Fokussiereinrichtung vorgesehen ist.

5. Vorrichtung zur Erfassung von durch das Gesichtsfeld eines optischen Sensors (6, 6', 6") bewegten Objekten (1, 2, 3) mit einer Einrichtung zur Selektion von interessierenden Bereichen, die jeweils lediglich einem Teil des Gesichtfeldes des optischen Sensors (6, 6', 6") zugeordnet sind,
**dadurch gekennzeichnet ,**
**dass** ein Entfernungsmesser (5) in den optischen Sensor (6, 6', 6") integriert oder diesem in Bewegungsrichtung (A) der Objekte (1, 2, 3) vor- oder nachgeschaltet ist,
**dass** der Entfernungsmesser (5) zur Ermittlung der Abstände der dem Entfernungsmesser (5) zugewandten Objektoberflächen ausgelegt und mit einer Auswerteschaltung (9, 9', 9") zur Berechnung der interessierenden Bereiche in Abhängigkeit von den ermittelten Abständen gekoppelt ist,
**dass** die Auswerteschaltung (9, 9', 9") zur Verarbeitung nur derjenigen Bilddaten des Sensors (6, 6', 6") ausgelegt ist, welche den interessierenden Bereichen zugeordnet sind, und
und **dass** zumindest zwei optische Sensoren (6, 6', 6") vorgesehen sind, welche die bewegten Objekte (1, 2, 3) unter verschiedenen Blickwinkeln erfassen.

6. Vorrichtung nach Anspruch 5,
**dadurch gekennzeichnet ,**
**dass** die optischen Achsen der optischen Sensoren (6, 6', 6") senkrecht zueinander stehen.

7. Vorrichtung nach einem der Ansprüche 5 oder 6,
**dadurch gekennzeichnet ,**
**dass** die optischen Achsen der optischen Sensoren (6, 6', 6") senkrecht oder schräg zur Bewegungsrichtung der Objekte (1, 2, 3) verlaufen.

8. Vorrichtung nach einem der Ansprüche 5 bis 7,
**dadurch gekennzeichnet ,**
**dass** die optische Achse eines optischen Sensors (6, 6', 6") senkrecht zur Förderebene (4) verläuft, auf der die Objekte (1, 2, 3) bewegt werden.

9. Vorrichtung nach einem der Ansprüche 5 bis 8,
**dadurch gekennzeichnet ,**
**dass** die optischen Sensoren (6, 6', 6") über ein Datennetzwerk mit einer oder mehreren Auswerteschaltungen (9, 9', 9") verbunden sind.

10. Vorrichtung nach einem der Ansprüche 5 bis 9,
**dadurch gekennzeichnet ,**
**dass** jedem optischen Sensor (6, 6', 6") jeweils eine Auswerteschaltung (9, 9', 9") zugeordnet ist.

11. Vorrichtung nach einem der Ansprüche 9 oder 10,
**dadurch gekennzeichnet,**
**dass** die optischen Sensoren (6, 6', 6") über ein Datennetzwerk sternförmig mit der oder den Auswerteschaltungen (9, 9', 9") verbunden sind.

12. Vorrichtung nach einem der Ansprüche 9 oder 10,
**dadurch gekennzeichnet ,**
**dass** sich in jeweils einem Netzwerkzweig ein optischer Sensor (6, 6', 6") und eine ihm zugeordnete Auswerteschaltung (9, 9', 9") befindet, wobei die Ausgänge der Auswerteschaltungen (9, 9', 9") auf einen gemeinsamen Netzwerkknotenpunkt geführt sind, welcher wiederum mit einer Weiterverarbeitungsstation (16) verbunden ist.

13. Vorrichtung nach einem der vorhergehenden Ansprüche,
**dadurch gekennzeichnet ,**
**dass** die Auswerteschaltung (9, 9', 9") zur automatisierten Decodierung von Schriftzeichen und/oder zur optischen Darbietung von Bildbereichen mit nicht automatisiert decodierbaren Schriftzeichen ausgelegt ist.

14. Vorrichtung nach einem der Ansprüche 5 bis 13,
**dadurch gekennzeichnet ,**
**dass** zumindest eine Auswerteschaltung (9, 9', 9") zur optischen Darbietung von von verschiedenen optischen Sensoren (6, 6', 6") gelieferten Bildbereichen ausgelegt ist.

15. Vorrichtung nach einem der vorhergehenden Ansprüche,
**dadurch gekennzeichnet ,**
**dass** die Auswerteschaltung (9, 9', 9") ein Eingabemedium zur manuellen Eingabe von visuell dargebotenen Schriftzeichen aufweist.

16. Vorrichtung nach einem der vorhergehenden Ansprüche,
**dadurch gekennzeichnet,**
**dass** der optische Sensor (6, 6', 6") als Kamera, insbesondere Zeilen- oder Matrixkamera oder als Barcodescanner ausgebildet ist.

17. Vorrichtung nach einem der vorhergehenden Ansprüche,
**dadurch gekennzeichnet ,**
**dass** der optische Sensor (6, 6', 6") und/oder die Auswerteschaltung (9, 9', 9") eine Datenschnittstelle (15) zur Übertragung der auf interessierende Bereiche bezogenen Daten an ein externes Gerät (16) aufweist.

18. Vorrichtung nach Anspruch 17,
**dadurch gekennzeichnet ,**
**dass** der optische Sensor (6, 6', 6") und/oder die Auswerteschaltung (9, 9', 9") mit einer Komprimierungsstufe (17) zur Komprimierung der auf interessierende Bereiche bezogenen, über die Datenschnittstelle (15) zu übertragenden Daten ausgestattet ist.

19. Vorrichtung nach Anspruch 18,
**dadurch gekennzeichnet ,**
**dass** die Komprimierungsstufe (17) zur Komprimierung von auf interessierende Bereiche bezogenen Bilddaten bereits während der Erfassung des jeweiligen Bildes ausgelegt ist.

20. Verfahren zur Erfassung von durch das Gesichtsfeld eines optischen Sensors (6, 6', 6") bewegten Objekten (1, 2, 3) bei dem interessierende Bereiche selektiert werden, die jeweils lediglich einem Teil des Gesichtfeldes des optischen Sensors (6, 6', 6") zugeordnet sind,
**dadurch gekennzeichnet ,**
**dass** mit einem in den optischen Sensor (6, 6', 6") integrierten oder diesem in Bewegungsrichtung (A) der Objekte (1, 2, 3) vor- oder nachgeschalteten Entfernungsmesser (5) die Abstände der dem Entfernungsmesser (5) zugewandten Objektoberflächen ermittelt werden, woraufhin mittels einer Auswerteschaltung (9, 9', 9") die interessierenden Bereiche in Abhängigkeit von den ermittelten Abständen berechnet werden, wobei von der Auswerteschaltung (9, 9', 9") die Auflösung oder der Vergrößerungsfaktor der vom optischen Sensor (6, 6', 6") erfassten Bilder ermittelt wird, und wobei die Auswerteschaltung (9, 9', 9") nur diejenigen Bilddaten des Sensors (6, 6', 6") verarbeitet, die den interessierenden Bereichen zugeordnet sind.

21. Verfahren zur Erfassung von durch das Gesichtsfeld eines optischen Sensors (6, 6', 6") bewegten Objekten (1, 2, 3) bei dem interessierende Bereiche selektiert werden, die jeweils lediglich einem Teil des Gesichtfeldes des optischen Sensors (6, 6', 6") zugeordnet sind,
**dadurch gekennzeichnet** ,
und zumindest zwei optische Sensoren (6, 6', 6") die bewegten Objekte (1, 2, 3) unter verschiedenen Blickwinkeln erfassen, dass mittels eines Entfernungsmessers (5) die Abstände der dem Entfernungsmesser (5) zugewandten Objektoberflächen ermittelt werden,
dass von einer Auswerteschaltung (9, 9', 9") interessierende Bereiche in Abhängigkeit von den ermittelten Abständen berechnet werden,
dass die Auswerteschaltung (9, 9', 9") nur diejenigen Bilddaten der Sensoren (6, 6', 6") verarbeitet, welche den interessierenden Bereichen zugeordnet sind.

## Claims

1. An apparatus for the sensing of objects (1, 2, 3) moved through the field of view of an optical sensor (6, 6', 6") comprising a device for the selection of regions of interest which are each only associated with a part of the field of view of the optical sensor (6, 6', 6"), **characterized in that**
a distance measurement device (5) is integrated into the optical sensor (6, 6', 6") or is connected upstream or downstream thereof in the direction of movement (A) of the objects (1, 2, 3);
**in that** the distance measurement device (5) is designed for the determination of the spacings of the object surfaces facing the distance measurement device (5) and is coupled to an evaluation circuit (9, 9', 9") for the computation of the regions of interest in dependence on the determined spacings;
**in that** the evaluation circuit (9, 9', 9") is designed for the processing of only those image data of the sensor (6, 6', 6") which are associated with the regions of interest; and
**in that** the evaluation circuit (9, 9', 9") is designed for the determination of the resolution or of the magnification factor of the images sensed by the optical sensor (6, 6', 6").

2. An apparatus in accordance with claim 1, **characterized in that** the evaluation circuit (9, 9', 9") is designed for the determination of the geometry of the objects (1, 2, 3) taking place in dependence on the determined spacings.

3. An apparatus in accordance with any one of the preceding claims, **characterized in that** the evaluation circuit (9, 9', 9") is designed for the determination of the volumes of the objects (1, 2, 3) taking place in dependence on the determined spacings.

4. An apparatus in accordance with any one of the preceding claims, **characterized in that** a camera focusing device is provided which is acted on in dependence on the determined spacings.

5. An apparatus for the sensing of objects (1, 2, 3) moved through the field of view of an optical sensor (6, 6', 6") comprising a device for the selection of regions of interest which are each only associated with a part of the field of view of the optical sensor (6, 6', 6"),
**characterized in that**
a distance measurement device (5) is integrated into the optical sensor (6, 6', 6") or is connected upstream or downstream thereof in the direction of movement (A) of the objects (1, 2, 3);
**in that** the distance measurement device (5) is designed for the determination of the spacings of the object surfaces facing the distance measurement device (5) and is coupled to an evaluation circuit (9, 9', 9") for the computation of the regions of interest in dependence on the determined spacings;
**in that** the evaluation circuit (9, 9', 9") is designed for the processing of only those image data of the sensor (6, 6', 6") which are associated with the regions of interest; and
**in that** at least two optical sensors (6, 6', 6") are provided which sense the moved objects (1, 2, 3) under different angles of view.

6. An apparatus in accordance with claim 5, **characterized in that** the optical axes of the optical sensors (6, 6', 6") stand perpendicular to one another.

7. An apparatus in accordance with one of the claims 5 or 6, **characterized in that** the optical axes of the optical sensors (6, 6', 6") extend perpendicular or obliquely to the direction of movement of the objects (1, 2, 3).

8. An apparatus in accordance with any one of the claims 5 to 7, **characterized in that** the optical axis of an optical sensor (6, 6', 6") extends perpendicular to the conveying plane (4) on which the objects (1, 2, 3) are moved.

9. An apparatus in accordance with any one of the claims 5 to 8, **characterized in that** the optical sensors (6, 6', 6") are connected to one or more evaluation circuits (9, 9', 9") over a data network.

10. An apparatus in accordance with any one of the claims 5 to 9, **characterized in that** a respective evaluation circuit (9, 9', 9") is associated with each optical sensor (6, 6' 6").

11. An apparatus in accordance with one of the claims 9 or 10,
**characterized in that** the optical sensors (6, 6', 6") are connected to the evaluation circuit or circuits (9, 9', 9") in star shape over a data network.

12. An apparatus in accordance with one of the claims 9 or 10, **characterized in that** an optical sensor (6, 6', 6") and an evaluation circuit (9, 9', 9") associated with it are located in a respective network branch, with the outputs of the evaluation circuits (9, 9', 9") being guided onto a common network node, which is in turn connected to a further processing station (16).

13. An apparatus in accordance with any one of the preceding claims, **characterized in that** the evaluation circuit (9, 9', 9") is designed for the automated decoding of characters and/or for the optical presentation of image regions with characters not decodable in an automated manner.

14. An apparatus in accordance with any one of the claims 5 to 13, **characterized in that** at least one evaluation circuit (9, 9', 9") is designed for the optical presentation of image regions delivered from different optical sensors (6, 6', 6").

15. An apparatus in accordance with any one of the preceding claims, **characterized in that** the evaluation circuit (9, 9', 9") has an input medium for the manual input of visually presented characters.

16. An apparatus in accordance with any one of the preceding claims, **characterized in that** the optical sensor (6, 6', 6") is made as a camera, in particular as a line camera or matrix camera or as a barcode scanner.

17. An apparatus in accordance with any one of the preceding claims, **characterized in that** the optical sensor (6, 6', 6") and/or the evaluation circuit (9, 9', 9") has/have a data interface (15) for the transmission of the data relating to regions of interest to an external device (16).

18. An apparatus in accordance with claim 17, **characterized in that** the optical sensor (6, 6', 6") and/or the evaluation circuit (9, 9', 9") is/are equipped with a compression stage (17) for the compression of the data relating to regions of interest and to be transmitted via the data interface (15).

19. An apparatus in accordance with claim 18, **characterized in that** the compression stage (17) is designed for the compression of image data relating to regions of interest during the sensing of the respective image.

20. A method for the sensing of objects (1, 2, 3) moved through the field of view of an optical sensor (6, 6', 6"), wherein regions of interest are selected which are each only associated with a part of the field of view of the optical sensor (6, 6', 6),
**characterized in that**
the spacings of the object surfaces facing the distance measurement device (5) are determined using a distance measurement device (5) integrated into the optical sensor (6, 6', 6") or connected upstream or downstream thereof in the direction of movement (A) of the objects (1, 2, 3), whereupon the regions of interest are computed by means of an evaluation circuit (9, 9', 9") in dependence on the determined spacings, with the resolution or the magnification factor of the images sensed by the optical sensor (6, 6',6") being determined and with the evaluation circuit (9, 9', 9") only processing those image data of the sensor (6, 6', 6") which are associated with the regions of interest.

21. A method for the sensing of objects (1, 2, 3) moved through the field of view of an optical sensor (6, 6', 6"), wherein regions of interest are selected which are each only associated with a part of the field of view of the optical sensor (6, 6', 6),
**characterized in that**
at least two optical sensors (6, 6', 6") sense the moved objects (1, 2, 3) under different angles of view;
**in that** the spacings of the object surfaces facing the distance measurement device (5) are determined by means of a distance measurement device (5);
**in that** regions of interest are computed by an evaluation circuit (9, 9', 9") in dependence on the determined spacings; and
**in that** the evaluation circuit (9, 9', 9") only processes those image data of the sensor (6, 6', 6") which are associated with the regions of interest.

## Revendications

1. Dispositif pour détecter des objets (1, 2, 3) en mouvement à travers le champ d'observation d'un capteur optique (6, 6', 6"), comprenant des moyens pour la sélection de zones présentant un intérêt, qui sont chacune associées à une partie uniquement du champ d'observation du capteur optique (6, 6', 6"),
**caractérisé en ce que**
un détecteur de distance (5) est intégré dans le capteur optique (6, 6', 6") ou placé devant ou derrière celui-ci dans la direction de mouvement (A) des objets (1, 2, 3),
**en ce que** le détecteur de distance (5) est conçu pour déterminer les distances des surfaces des objets tournées vers le détecteur de distance (5) et est couplé à un circuit d'évaluation (9, 9', 9") pour calculer les zones présentant un intérêt en fonction des distances déterminées,
**en ce que** le circuit d'évaluation (9, 9', 9") est conçu pour traiter uniquement celles des données image du capteur (6, 6', 6") qui sont associées aux zones présentant un intérêt, et
**en ce que** le circuit d'évaluation (9, 9', 9") est conçu pour déterminer la résolution ou le facteur d'agrandissement des images captées par le capteur optique (6, 6', 6").

2. Dispositif selon la revendication 1,
**caractérisé en ce que** le circuit d'évaluation (9, 9', 9") est conçu pour déterminer, en fonction des distances déterminées, la géométrie des objets (1, 2, 3).

3. Dispositif selon l'une des revendications précédentes,
**caractérisé en ce que** le circuit d'évaluation (9, 9', 9") est conçu pour déterminer, en fonction des distances déterminées, les volumes des objets (1,2, 3).

4. Dispositif selon l'une des revendications dépendantes,
**caractérisé en ce qu'**il est prévu un dispositif de focalisation de caméra commandé en fonction des distances déterminées.

5. Dispositif pour détecter des objets (1, 2, 3) en mouvement à travers le champ d'observation d'un capteur optique (6, 6', 6"), comprenant des moyens pour la sélection de zones présentant un intérêt, qui sont chacune associées à une partie du champ d'observation du capteur optique (6, 6', 6"),
**caractérisé en ce que**
un détecteur de distance (5) est intégré dans le capteur optique (6, 6', 6") ou placé devant ou derrière celui-ci dans la direction de mouvement (A) des objets (1,2,3),
**en ce que** le détecteur de distance (5) est conçu pour déterminer les distances des surfaces des objets tournées vers le détecteur de distance (5) et est couplé à un circuit d'évaluation (9, 9', 9") pour calculer les zones présentant un intérêt en fonction des distances déterminées,
**en ce que** le circuit d'évaluation (9, 9', 9") est conçu pour traiter uniquement celles des données image du capteur (6, 6', 6") qui sont associées aux zones présentant un intérêt, et
**en ce qu'**il est prévu au moins deux capteurs optiques (6, 6', 6") qui détectent les objets en mouvement (1, 2, 3) sous des angles d'observation différents.

6. Dispositif selon la revendication 5,
**caractérisé en ce que** les axes optiques des capteurs optiques (6, 6', 6") sont perpendiculaires l'un à l'autre.

7. Dispositif selon l'une des revendications 5 ou 6,
**caractérisé en ce que** les axes optiques des capteurs optiques (6, 6', 6") sont perpendiculaires ou en oblique par rapport à la direction de mouvement des objets (1, 2, 3).

8. Dispositif selon l'une des revendications 5 à 7,
**caractérisé en ce que** l'axe optique d'un capteur optique (6, 6', 6") est perpendiculaire au plan de convoyage (4) sur lequel les objets (1, 2, 3) sont déplacés.

9. Dispositif selon l'une des revendications 5 à 8,
**caractérisé en ce que** les capteurs optiques (6, 6', 6") sont reliés via un réseau de données à un ou plusieurs circuits d'évaluation (9, 9', 9").

10. Dispositif selon l'une des revendications 5 à 9,
**caractérisé en ce qu'**un circuit d'évaluation (9, 9', 9") respectif est associé à chaque capteur optique (6, 6', 6").

11. Dispositif selon l'une des revendications 9 ou 10,
**caractérisé en ce que** les capteurs optiques (6, 6', 6") sont reliés via un réseau de données en étoile au(x) circuit(s) d'évaluation (9, 9', 9").

12. Dispositif selon l'une des revendications 9 ou 10,
**caractérisé en ce que** dans une ramification de réseau respectif est prévu un capteur optique (6, 6', 6") et un circuit d'évaluation (9, 9', 9") qui lui est associé, les sorties des circuits d'évaluation (9, 9', 9") étant menées à un noeud commun du réseau, lequel est relié à son tour à une station (16) pour la poursuite du traitement.

13. Dispositif selon l'une des revendications précédentes,
**caractérisé en ce que** le circuit d'évaluation (9, 9', 9") est conçu pour le décodage automatique de signes d'écriture et/ou pour la représentation optique de zones d'image avec des signes d'écriture qui ne peuvent pas être automatiquement décodés.

14. Dispositif selon l'une des revendications 5 à 13,
**caractérisé en ce qu'**au moins un circuit d'évaluation (9, 9', 9") est conçu pour l'affichage optique de zones image fournies par différents capteurs optiques (6, 6', 6").

15. Dispositif selon l'une des revendications précédentes,
**caractérisé en ce que** le circuit d'évaluation (9, 9', 9") comprend un moyen de saisie pour la saisie manuelle de signes d'écriture présentés visuellement.

16. Dispositif selon l'une des revendications précédentes,
**caractérisé en ce que** le capteur optique (6, 6', 6") est réalisé sous forme de caméra, en particulier de caméra à ligne ou à matrice, ou sous forme de scanner de code à barres.

17. Dispositif selon l'une des revendications précédentes,
**caractérisé en ce que** le capteur optique (6, 6', 6") et/ou le circuit d'évaluation (9, 9', 9 ") comprend une interface de données (15) pour la transmission à un appareil externe (16) des données concernant les zones présentant un intérêt.

18. Dispositif selon la revendication 17,
**caractérisé en ce que** le capteur optique (6, 6', 6") et/ou le circuit d'évaluation (9, 9', 9") est doté d'un étage de compression (17) pour la compression des données concernant les zones présentant un intérêt qu'il s'agit de transmettre via l'interface de données (15).

19. Dispositif selon la revendication 18,
**caractérisé en ce que** l'étage de compression (17) est conçu pour comprimer les données image concernant les zones présentant un intérêt déjà pendant la saisie de l'image respective.

20. Procédé pour la détection d'objets (1, 2, 3) en mouvement à travers le champ d'observation d'un capteur optique (6, 6', 6"), dans lequel on sélectionne des zones présentant un intérêt qui sont associées respectivement seulement à une partie du champ d'observation du capteur optique (6, 6', 6"),
**caractérisé en ce que**
au moyen d'un détecteur de distance (5) intégré dans le capteur optique (6, 6', 6") ou placé devant ou derrière celui-ci en direction de mouvement (A) des objets (1, 2, 3), on détermine les distances des surfaces des objets tournées vers le détecteur de distance (5), suite à quoi on calcule au moyen d'un circuit d'évaluation (9, 9', 9") les zones présentant un intérêt en fonction des distances déterminées, dans lequel le circuit d'évaluation (9, 9', 9") détermine la résolution ou le facteur d'agrandissement des images captées par le capteur optique (6, 6', 6"), et dans lequel le circuit d'évaluation (9, 9', 9") traite uniquement celles des données image du capteur (6, 6', 6") qui sont associées aux zones présentant un intérêt.

21. Procédé pour la détection d'objets (1, 2, 3) en mouvement à travers le champ d'observation d'un capteur optique (6, 6', 6"), dans lequel on sélectionne des zones présentant un intérêt qui sont associées respectivement seulement à une partie du champ d'observation du capteur optique (6, 6', 6"),
**caractérisé en ce que**
il est prévu au moins deux capteurs optiques (6, 6', 6") qui détectent les objets en mouvement (1, 2, 3) sous des angles d'observations différents, **en ce que**, au moyen d'un détecteur de distance (5), on détermine les distances des surfaces des objets tournées vers le détecteur de distance (5),
**en ce qu'**on calcule au moyen d'un circuit d'évaluation (9, 9', 9") les zones présentant un intérêt en fonction des distances déterminées, et
**en ce que** le circuit d'évaluation (9, 9', 9") traite uniquement celles des données image du capteur (6, 6', 6") qui sont associées aux zones présentant un intérêt.
